# EUROPEAN PATENT APPLICATION

(11) **EP 4 604 584 A1**
(43) Date of publication of application: **20.08.2025**
(21) Application number: 22963790.5
(22) Date of filing: 31.10.2022
(51) Int. Cl.: H04W 4/02

(54) **CELL DETERMINATION METHOD AND APPARATUS**

(71) Applicant: Huawei Technologies Co., Ltd., Shenzhen, Guangdong 518129 (CN)
(72) Inventor: LUO, Hejia, Shenzhen, Guangdong 518129 (CN); MENG, Xian, Shenzhen, Guangdong 518129 (CN); WANG, Xiaolu, Shenzhen, Guangdong 518129 (CN); WANG, Jun, Shenzhen, Guangdong 518129 (CN)
(74) Representative: Isarpatent
(86) International application number: PCT/CN2022/128814
(87) International publication number: WO 2024/092471

(57) **Abstract**

This application provides a cell determining method and an apparatus, to reduce overheads of configuration information and improve communication efficiency. According to the method, a network may group all cells, cells that can provide services for a same object are considered as a cell set, and different objects may correspond to different cell sets. In this way, for a target object, configuration information may indicate only service times during which at least two cells in a first cell set in all the cells provide services for the target object. This can reduce overheads of the configuration information and improve communication efficiency.

## Description

### TECHNICAL FIELD

This application relates to the communication field, and in particular, to a cell determining method and an apparatus.

### BACKGROUND

Non-terrestrial network (non-terrestrial network, NTN) communication may use a high altitude platform station like a satellite for networking, and provide services such as data transmission and voice communication for user equipment (user equipment, UE). A data processing capability and transmit power of the NTN communication are usually limited by manufacturing and launching costs of a satellite. To break through this limitation, a satellite operator may deploy a giant low earth orbit constellation, that is, increase a quantity of satellites like low earth orbit satellites, to compensate for a limitation of a communication capability of a single satellite. A plurality of satellites can simultaneously provide communication services within a period of time, to implement multi-satellite coordinated transmission, and improve an overall signal processing capability and communication throughput of the NTN communication.

To ensure that the UE discovers and accesses cells of these satellites that can simultaneously provide communication services, a network may configure service start times and service end times of cells (cells) of all satellites in a non-geosynchronous constellation to the UE. The UE may determine, based on the service start times and the service end times, cells that are providing communication services within a time at which the communication services need to be obtained, to perform measurement on these cells, so as to access these cells to obtain the communication services. However, this configuration manner has high overheads and low communication efficiency.

### SUMMARY

Embodiments of this application provide a cell determining method and an apparatus, to reduce overheads of configuration information and improve communication efficiency.

To achieve the foregoing objectives, this application uses the following technical solutions.

According to a first aspect, a cell determining method is provided. The method includes: A terminal obtains configuration information. The configuration information includes configuration information of a first cell set, the configuration information of the first cell set includes service times during which at least two cells in the first cell set provide services for a target object, and the first cell set is a set of cells that provide services for the target object. In this way, the terminal determines a first to-be-measured cell in the first cell set based on the configuration information of the first cell set.

It can be learned from the method according to the first aspect that, a network may group all cells, cells that can provide services for a same object are considered as a cell set, and different objects may correspond to different cell sets. In this way, for the target object, the configuration information may indicate only the service times during which the at least two cells in the first cell set in all the cells provide services for the target object. This reduces overheads of the configuration information and improves communication efficiency.

In a possible design solution, the service times during which the at least two cells in the first cell set provide services for the target object include at least one of the following: service start times of the at least two cells in the first cell set or service end times of the at least two cells in the first cell set. For cells that can provide services for a same target object, for example, cells in the first cell set, these cells can usually provide services for the target object in a time sequence. In this case, cells that may provide services for the target object at a time point may also be determined based on only service start times or service end times of these cells. Therefore, the configuration information may indicate only the service start times or the service end times at which the at least two cells in the first cell set provide services for the target object, so that overheads of the configuration information can be further reduced, and communication efficiency can be further improved.

Optionally, the at least two cells in the first cell set include a first cell and a second cell whose service end times are adjacent, a first time at which the terminal initiates measurement is after the service end time of the first cell, the first time is before the service end time of the second cell, and the first to-be-measured cell includes the second cell. It may be understood that, to ensure service continuity, a service time of the first cell and a service time of the second cell usually overlap. For example, when the first cell stops providing a service, the second cell has started to provide a service. In this case, if the first time is between the service end time of the first cell and the service end time of the second cell, the second cell is providing a service. Therefore, the terminal may perform measurement on the second cell that is providing a service, and does not need to perform measurement on the first cell that has stopped providing a service, so as to avoid measurement redundancy and reduce power consumption of the terminal.

Further, the at least two cells in the first cell set further include a third cell whose service end time is adjacent to the service end time of the second cell, the service end time of the third cell is after the service end time of the second cell, and the first to-be-measured cell further includes the third cell. It may be understood that the service time of the second cell and a service time of the third cell usually overlap. For example, before the second cell stops providing a service, the third cell has started to provide a service, to ensure service continuity. In this case, the third cell may have started to provide a service at the first time. Therefore, the terminal needs to perform measurement on the third cell that may provide a service, to ensure that the terminal can discover more cells that are providing services.

Optionally, the at least two cells in the first cell set include a first cell and a second cell whose service start times are adjacent, a first time at which the terminal initiates measurement is after the service start time of the first cell, the first time is before the service start time of the second cell, and the first to-be-measured cell includes the first cell. It may be understood that, to ensure service continuity, a service time of the first cell and a service time of the second cell usually overlap. For example, when the second cell has started to provide a service, the first cell has not stopped providing a service. In this case, if the first time is between the service start time of the first cell and the service start time of the second cell, the first cell is providing a service. Therefore, the terminal may perform measurement on the first cell that is providing a service, and does not need to perform measurement on the second cell that has not started to provide a service, so as to avoid measurement redundancy and reduce power consumption of the terminal.

Further, the at least two cells in the first cell set further include a third cell whose service start time is adjacent to the service start time of the first cell, the service start time of the third cell is before the service start time of the first cell, and the first to-be-measured cell further includes the third cell. It may be understood that the service time of the first cell and a service time of the third cell usually overlap. For example, when the first cell starts to provide a service, the third cell has not stopped providing a service, to ensure service continuity. In this case, the third cell may have not stopped providing a service at the first time. Therefore, the terminal needs to perform measurement on the third cell that may provide a service, to ensure that the terminal can discover more cells that are providing services.

In a possible design solution, the first cell set is a set of cells that provide services for the target object in a time sequence, and may be specifically a set of cells that are of different satellites and that provide services for the target object in a time sequence, to ensure that the target object can continuously obtain services and avoid service interruption.

In a possible design solution, the configuration information further includes configuration information of a second cell set, the configuration information of the second cell set includes service times during which at least two cells in the second cell set provide services, and the at least two cells in the second cell set partially overlap with the at least two cells in the first cell set. The method according to the first aspect may further include: The terminal determines a second to-be-measured cell in the second cell set based on the configuration information of the second cell set.

It can be learned that, because the at least two cells in the second cell set partially overlap the at least two cells in the first cell set, the at least two cells in the second cell set may also provide services for the target object. Therefore, the configuration information may further indicate the service times of the at least two cells in the first cell set, so that the terminal can perform measurement on the second to-be-measured cell that may provide a service for the target object, and ensure that the terminal can discover more cells that are providing services.

Optionally, the service times of the at least two cells in the second cell set include at least one of the following: service start times of the at least two cells in the second cell set or service end times of the at least two cells in the second cell set. It may be learned that, similar to that of the first cell set, cells that may provide services at a time point may also be determined based on only the service start times or the service end times of the at least two cells in the second cell set. Therefore, the configuration information may alternatively indicate only the service start times or the service end times at which the at least two cells in the second cell set provide services, so that overheads of the configuration information can be further reduced, and communication efficiency can be further improved.

Further, the at least two cells in the second cell set include a fourth cell and a fifth cell whose service end times are adjacent, a first time at which the terminal initiates measurement is after the service end time of the fourth cell, the first time is before the service end time of the fifth cell, and the second to-be-measured cell includes the fifth cell. It may be understood that, to ensure service continuity, a service time of the fourth cell and a service time of the fifth cell usually overlap. For example, when the fourth cell stops providing a service, the fifth cell has started to provide a service. In this case, if the first time is between the service end time of the fourth cell and the service end time of the fifth cell, the fifth cell is providing a service. Therefore, the terminal may perform measurement on the fifth cell that is providing a service, and does not need to perform measurement on the fourth cell that has stopped providing a service, so as to avoid measurement redundancy and reduce power consumption of the terminal.

Further, the at least two cells in the second cell set further include a sixth cell whose service end time is adjacent to the service end time of the fifth cell, the service end time of the sixth cell is after the service end time of the fifth cell, and the second to-be-measured cell further includes the sixth cell. It may be understood that the service time of the fifth cell and a service time of the sixth cell usually overlap. For example, before the fifth cell stops providing a service, the sixth cell has started to provide a service, to ensure service continuity. In this case, the sixth cell may have started to provide a service at the first time. Therefore, the terminal needs to perform measurement on the sixth cell that may provide a service, to ensure that the terminal can discover more cells that are providing services.

Further, the at least two cells in the second cell set include a fourth cell and a fifth cell whose service start times are adjacent, a first time at which the terminal initiates measurement is after the service start time of the fourth cell, the first time is before the service start time of the fifth cell, and the second to-be-measured cell includes the fourth cell. It may be understood that, to ensure service continuity, a service time of the fourth cell and a service time of the fifth cell usually overlap. For example, when the fifth cell has started to provide a service, the fourth cell has not stopped providing a service. In this case, if the first time is between the service start time of the fourth cell and the service start time of the fifth cell, the fourth cell is providing a service. Therefore, the terminal may perform measurement on the fourth cell that is providing a service, and does not need to perform measurement on the fifth cell that has not started to provide a service, so as to avoid measurement redundancy and reduce power consumption of the terminal.

Further, the at least two cells in the second cell set further include a sixth cell whose service start time is adjacent to the service start time of the fourth cell, the service start time of the sixth cell is before the service start time of the fourth cell, and the second to-be-measured cell further includes the sixth cell. It may be understood that the service time of the fourth cell and a service time of the sixth cell usually overlap. For example, when the fourth cell starts to provide a service, the sixth cell has not stopped providing a service, to ensure service continuity. In this case, the sixth cell may have not stopped providing a service at the first time. Therefore, the terminal needs to perform measurement on the sixth cell that may provide a service, to ensure that the terminal can discover more cells that are providing services.

In a possible design solution, the service times of the at least two cells are coordinated universal time UTC, or the service times of the at least two cells are time offsets relative to reference UTC. It may be understood that, because the at least two cells provide services for the target object in a time sequence, a service time of a cell that provides a service later may be determined by adding a time offset to the reference UTC. Therefore, the configuration information may indicate only reference UTC and one time offset, to further reduce overheads of the configuration information.

In a possible design solution, the target object is any one of the following: a target area, a target terrestrial station, a target base station, or a target terminal, so as to be applicable to different scenarios.

According to a second aspect, a cell determining method is provided. The method includes: A network device obtains configuration information, and sends the configuration information. The configuration information includes configuration information of a first cell set. The configuration information of the first cell set includes service times during which at least two cells in the first cell set provide services for a target object. The first cell set is a set of cells that provide services for the target object, and the configuration information of the first cell set is used by a terminal to determine a to-be-measured cell in the first cell set.

In a possible design solution, the service times during which the at least two cells in the first cell set provide services for the target object include at least one of the following: service start times of the at least two cells in the first cell set or service end times of the at least two cells in the first cell set.

In a possible design solution, the first cell set is a set of cells that provide services for the target object in a time sequence.

In a possible design solution, the first cell set is a set of cells that are of different satellites and that provide services for the target object in a time sequence.

In a possible design solution, the configuration information further includes configuration information of a second cell set. The configuration information of the second cell set includes service times of at least two cells in the second cell set. The at least two cells in the second cell set partially overlap with the at least two cells in the first cell set, and the configuration information of the second cell set is used by the terminal to determine a to-be-measured cell in the second cell set.

Optionally, the service times of the at least two cells in the second cell set include at least one of the following: service start times of the at least two cells in the second cell set or service end times of the at least two cells in the second cell set.

In a possible design solution, the service times of the at least two cells are coordinated universal time UTC, or the service times of the at least two cells are time offsets relative to reference UTC.

In a possible design solution, the target object is any one of the following: a target area, a target terrestrial station, a target base station, or a target terminal.

In addition, for technical effect of the cell determining method according to the second aspect, refer to the technical effect of the cell determining method according to the first aspect. Details are not described herein again.

According to a third aspect, a cell determining method is provided. The method includes: A network device obtains configuration information, and sends the configuration information. The configuration information includes configuration information of a first cell set. The configuration information of the first cell set includes service times during which at least two cells in the first cell set provide services for a target object. The first cell set is a set of cells that provide services for the target object, and the configuration information of the first cell set is used by a terminal to determine a to-be-measured cell in the first cell set. In this way, the terminal determines a first to-be-measured cell in the first cell set based on the configuration information of the first cell set.

In a possible design solution, the service times during which the at least two cells in the first cell set provide services for the target object include at least one of the following: service start times of the at least two cells in the first cell set or service end times of the at least two cells in the first cell set.

Optionally, the at least two cells in the first cell set include a first cell and a second cell whose service end times are adjacent, a first time at which the terminal initiates measurement is after the service end time of the first cell, the first time is before the service end time of the second cell, and the first to-be-measured cell includes the second cell.

Further, the at least two cells in the first cell set further include a third cell whose service end time is adjacent to the service end time of the second cell, the service end time of the third cell is after the service end time of the second cell, and the first to-be-measured cell further includes the third cell.

Optionally, the at least two cells in the first cell set include a first cell and a second cell whose service start times are adjacent, a first time at which the terminal initiates measurement is after the service start time of the first cell, the first time is before the service start time of the second cell, and the first to-be-measured cell includes the first cell.

Further, the at least two cells in the first cell set further include a third cell whose service start time is adjacent to the service start time of the first cell, the service start time of the third cell is before the service start time of the first cell, and the first to-be-measured cell further includes the third cell.

In a possible design solution, the first cell set is a set of cells that provide services for the target object in a time sequence, and may be specifically a set of cells that are of different satellites and that provide services for the target object in a time sequence.

In a possible design solution, the configuration information further includes configuration information of a second cell set, the configuration information of the second cell set includes service times of at least two cells in the second cell set, and the at least two cells in the second cell set partially overlap with the at least two cells in the first cell set. The method according to the third aspect may further include: The terminal determines a second to-be-measured cell in the second cell set based on the configuration information of the second cell set.

Optionally, the service times of the at least two cells in the second cell set include at least one of the following: service start times of the at least two cells in the second cell set or service end times of the at least two cells in the second cell set.

Further, the at least two cells in the second cell set include a fourth cell and a fifth cell whose service end times are adjacent, a first time at which the terminal initiates measurement is after the service end time of the fourth cell, the first time is before the service end time of the fifth cell, and the second to-be-measured cell includes the fifth cell.

Further, the at least two cells in the second cell set further include a sixth cell whose service end time is adjacent to the service end time of the fifth cell, the service end time of the sixth cell is after the service end time of the fifth cell, and the second to-be-measured cell further includes the sixth cell.

Further, the at least two cells in the second cell set include a fourth cell and a fifth cell whose service start times are adjacent, a first time at which the terminal initiates measurement is after the service start time of the fourth cell, the first time is before the service start time of the fifth cell, and the second to-be-measured cell includes the fourth cell.

Further, the at least two cells in the second cell set further include a sixth cell whose service start time is adjacent to the service start time of the fourth cell, the service start time of the sixth cell is before the service start time of the fourth cell, and the second to-be-measured cell further includes the sixth cell.

In a possible design solution, the service times of the at least two cells are coordinated universal time UTC, or the service times of the at least two cells are time offsets relative to reference UTC.

In a possible design solution, the target object is any one of the following: a target area, a target terrestrial station, a target base station, or a target terminal.

According to a fourth aspect, a communication apparatus is provided. The communication apparatus includes modules configured to perform the method according to the first aspect, for example, a transceiver module and a processing module. For example, the transceiver module is configured to indicate a transceiver function of the communication apparatus, and the processing module is configured to perform a function of the communication apparatus other than the transceiver function.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the first aspect.

It may be understood that the communication apparatus according to the fourth aspect may be a terminal, or may be a chip (system) or another part or component that may be disposed in a terminal, or may be an apparatus including a terminal. This is not limited in this application.

In addition, for technical effect of the communication apparatus according to the fourth aspect, refer to the technical effect of the method according to the first aspect. Details are not described herein again.

According to a fifth aspect, a communication apparatus is provided. The communication apparatus includes modules configured to perform the method according to the second aspect, for example, a transceiver module and a processing module. For example, the transceiver module is configured to indicate a transceiver function of the communication apparatus, and the processing module is configured to perform a function of the communication apparatus other than the transceiver function.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the second aspect.

It may be understood that the communication apparatus according to the fifth aspect may be a network device, may be a chip (system) or another part or component that may be disposed in a network device, or may be an apparatus including a network device. This is not limited in this application.

In addition, for technical effect of the communication apparatus according to the fifth aspect, refer to the technical effect of the method according to the second aspect. Details are not described herein again.

According to a sixth aspect, a communication apparatus is provided. The communication apparatus includes a processor. The processor is configured to perform the method according to any possible implementation of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store a computer program and/or data related to the method according to any one of the first aspect or the second aspect.

In embodiments of this application, the communication apparatus according to the sixth aspect may be the terminal according to the first aspect or the network device according to the second aspect, or a chip (system) or another part or component that may be disposed in the terminal or the network device, or an apparatus including the terminal or the network device.

In addition, for technical effect of the communication apparatus according to the sixth aspect, refer to the technical effect of the method according to any implementation of the first aspect or the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the method according to any possible implementation of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the terminal according to the first aspect or the network device according to the second aspect, or a chip (system) or another part or component that may be disposed in the terminal or the network device, or an apparatus including the terminal or the network device.

In addition, for technical effect of the communication apparatus according to the seventh aspect, refer to the technical effect of the method according to any implementation of the first aspect or the second aspect. Details are not described herein again.

According to an eighth aspect, a communication apparatus is provided, and includes a processor and a memory. The memory is configured to store a computer program. When the processor executes the computer program, the communication apparatus is enabled to perform the method according to any implementation of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the terminal according to the first aspect or the network device according to the second aspect, or a chip (system) or another part or component that may be disposed in the terminal or the network device, or an apparatus including the terminal or the network device.

In addition, for technical effect of the communication apparatus according to the eighth aspect, refer to the technical effect of the method according to any implementation of the first aspect or the second aspect. Details are not described herein again.

According to a ninth aspect, a communication system is provided. The communication system includes a terminal configured to perform the method according to the first aspect and a network device configured to perform the method according to the second aspect.

According to a tenth aspect, a computer-readable storage medium is provided, and includes a computer program or instructions. When the computer program or the instructions are run on a computer, the computer is enabled to perform the method according to any possible implementation of the first aspect or the second aspect.

According to an eleventh aspect, a computer program product is provided, and includes a computer program or instructions. When the computer program or the instructions are run on a computer, the computer is enabled to perform the method according to any possible implementation of the first aspect or the second aspect.

### BRIEF DESCRIPTION OF DRAWINGS

FIG. 1 is a diagram of an architecture of NTN communication in a transparent mode;
FIG. 2 is a diagram of an architecture of NTN communication in a regenerative mode;
FIG. 3 is a diagram of a scenario of multi-satellite coordinated transmission;
FIG. 4 is a diagram of an architecture of a communication system according to an embodiment of this application;
FIG. 5 is a schematic flowchart of a communication method according to an embodiment of this application;
FIG. 6 is a diagram of a service time of a cell in a cell set;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

For ease of understanding, the following first describes technical terms in embodiments of this application.

### 1. Non-terrestrial network (non-terrestrial network, NTN) communication:

Currently, a new radio (new radio, NR) system has entered a commercial deployment phase from a standardization phase. The NR system is researched and designed based on characteristics of terrestrial communication, and has a characteristic of providing high-rate, high-reliability, and low-delay communication for a user terminal. Compared with the terrestrial communication, the NTN communication has characteristics such as a large coverage area and flexible networking. Currently, research institutes, communication organizations, companies, and the like all have participated in research on NTN communication technologies and standards, aiming to build a unified communication network for space-air-ground communication.

The NTN communication may use devices such as an unmanned aerial vehicle and a high altitude platform station for networking, and is used to provide services such as data transmission and voice communication for user equipment (user equipment, UE). For example, a satellite in a high altitude platform station (high altitude platform station, HAPS) is generally 8 km (km) to 50 km above the ground. Satellites can be classified into three types based on an orbital altitude: a geostationary earth orbit (geostationary earth orbit, GEO) satellite, also referred to as a synchronous orbit satellite, a medium earth orbit (medium earth orbit, MEO) satellite, and a low earth orbit (low earth orbit, LEO) satellite.

The GEO satellite has an orbital altitude of 35786 km. A main advantage is that the GEO satellite remains stationary relative to the ground and provides a large coverage area. However, the GEO satellite has the following disadvantages: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and a round-trip delay may reach about 500 ms (ms). This cannot meet requirements of real-time services. (3) The GEO satellite has limited orbit resources and high launching costs, and cannot provide coverage for polar regions of the earth. The MEO satellite has an orbital altitude of 2000 km to 35786 km. An advantage is that the MEO satellite can implement global coverage by using a small quantity of satellites. However, the orbital altitude of the MEO satellite is higher than that of the LEO satellite, and a transmission delay is still longer than that of the LEO satellite. Therefore, the MEO satellite is mainly used for positioning and navigation. The LEO satellite has an orbital altitude of 300 km to 2000 km. The LEO satellite has a lower orbital altitude than the MEO satellite and the GEO satellite, and has advantages of a short data transmission delay, a small transmission loss, and low launching costs. Therefore, LEO satellite communication has also gained wide attention in recent years.

The NTN communication may be classified based on a working mode of a satellite, for example, including a transparent (transparent) mode and a regenerative (regenerative) mode.

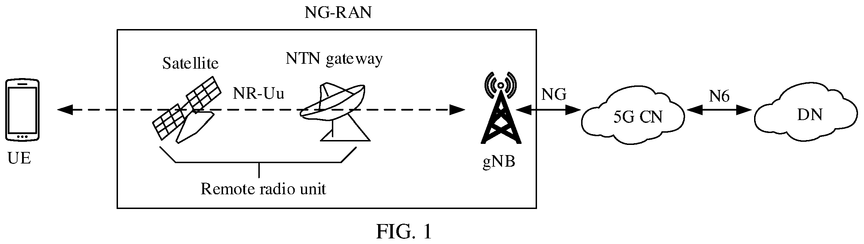

FIG. 1 is a diagram of an architecture of NTN communication in a transparent mode. As shown in FIG. 1, a satellite has a relay forwarding function. An NTN gateway has functions of a base station or some functions of a base station. The NTN gateway may be understood as a base station, for example, a next generation NodeB (the next generation NodeB, gNB), and a communication delay of the NTN is a transmission delay from a satellite to the NTN gateway. Alternatively, the NTN gateway and the base station may be separately deployed. The communication delay of the NTN includes two parts: the transmission delay from the satellite to the NTN gateway and a transmission delay from the NTN gateway to the base station. The UE may access the base station via a satellite, to communicate with a data network (data network, DN) over a core network (core network, CN), like a 5th generation (5th generation, 5G) CN.

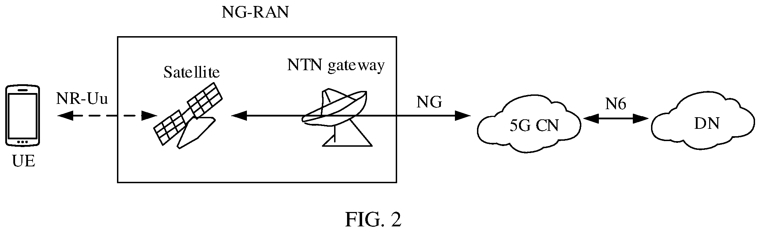

FIG. 2 is a diagram of an architecture of NTN communication in a regenerative mode. As shown in FIG. 2, a satellite has a data processing capability, and has functions of a base station or some functions of a base station. In other words, the satellite may be understood as a base station. In this case, the UE may access the satellite, to communicate with the DN over the CN.

It can be learned that, regardless of the transparent mode or the regenerative mode, the NTN communication may implement interconnection between the satellite and the CN through a defined interface between the base station and the CN, or may implement assistance and interconnection between satellites with higher time validity through a defined interface between base stations. In a new radio (new radio, NR) system, that is, a 5G system, an interface between base stations is referred to as an Xn interface, and an interface between a base station and a core network is referred to as an NG interface.

It may be further understood that the foregoing description is provided by using a satellite as an example, and the satellite may alternatively be replaced with another HAPS device or an unmanned aerial vehicle. Satellites may alternatively be classified into a medium earth orbit satellite, a high earth orbit satellite, a tilted synchronous orbit satellite, a synchronous orbit satellite, and the like.

### 2. Multi-satellite coordinated transmission:

A data processing capability and transmit power of the NTN communication are usually limited by manufacturing and launching costs of a satellite, so that the NTN communication cannot provide a communication rate comparable to that of the terrestrial communication for the UE temporarily. To break through this limitation, satellite operators are mainly preparing to deploy a giant low earth orbit constellation, which is to compensate for a limitation of a communication capability of a single satellite by increasing a quantity of low earth orbit satellites. In this case, the UE may discover, within a period of time, a plurality of low earth orbit satellites that can communicate with each other. In other words, for the UE, the plurality of low earth orbit satellites that can communicate with each other are visible. The plurality of low earth orbit satellites may all provide a communication service for the UE, to implement multi-satellite coordinated transmission, and improve an overall signal processing capability and communication throughput of the NTN communication. For ease of description, unless otherwise specified, the satellites mentioned below may be understood as low earth orbit satellites.

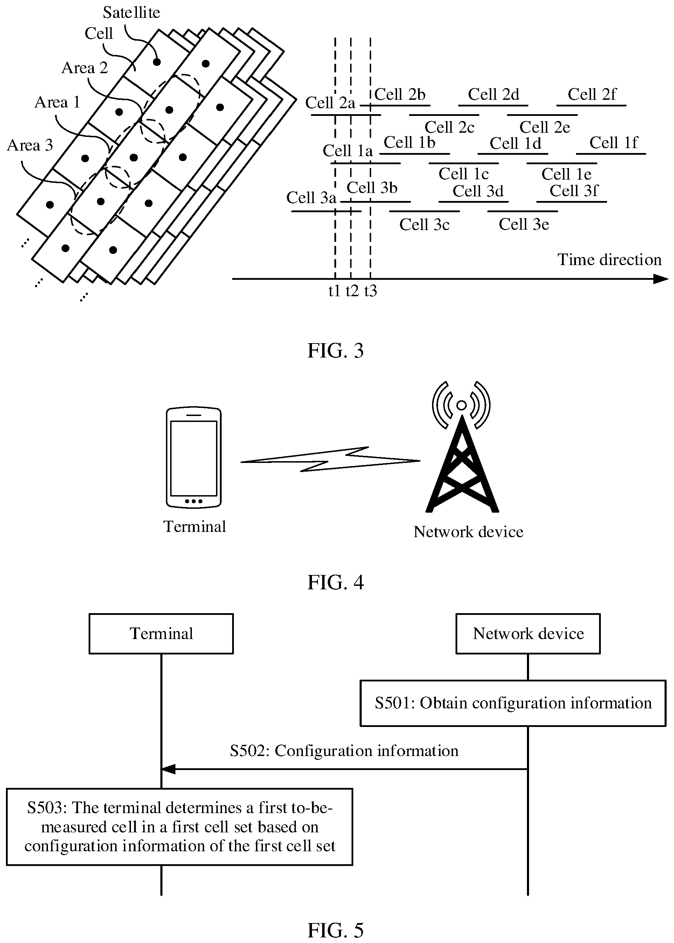

FIG. 3 is a diagram of a scenario of multi-satellite coordinated transmission. As shown in FIG. 3, physical areas on the ground may include an area 1, an area 2, and an area 3. The area 1 is adjacent to the area 2, and the area 2 is adjacent to the area 3. A plurality of satellites may sequentially run above the area 1 to the area 3 in orbit, so that signals of the plurality of satellites can sequentially cover the area 1 to the area 3, and sequentially provide services for UE in the area 1 to the area 3.

The area 1 is used as an example. When a satellite 1a moves in orbit until a signal of the satellite 1a starts to cover the area 1, it may be considered that the satellite 1a provides a cell 1a, that is, the cell 1a is generated. The cell 1a may be understood as a logical area, and is configured to provide a service for UE in the area 1, for example, UE 1. A time at which the signal of the satellite 1a starts to cover the area 1 may also be understood as a time at which the satellite 1a starts to provide a service for the area 1, that is, a service start time of the cell 1a. Then, when the satellite 1a moves in orbit until the signal of the satellite 1a cannot cover the area 1, it may be considered that the cell 1a provided by the satellite 1a ends, that is, the cell 1a disappears, and cannot provide a service for the UE 1. A time at which the signal of the satellite 1a cannot cover the area 1 may also be understood as a time at which the satellite 1a stops providing a service for the area 1, that is, a service end time of the cell 1a. A time period between the service start time and the service end time of the cell 1a may be understood as a time period in which the cell 1a exists, or a service time period, in other words, a time period in which the satellite 1a provides a service for the area 1. To ensure service continuity, before the cell 1a disappears, a satellite 1b that is in a same orbit as the satellite 1a may move in orbit until a signal of the satellite 1b starts to cover the area 1, and the cell 1b is generated to continue to provide a service for the UE 1. Then, when the satellite 1b moves in orbit until the signal of the satellite 1b cannot cover the area 1, the cell 1b disappears and cannot provide a service for the UE 1. Before the cell 1b disappears, a satellite 1c that is in a same orbit as the satellite 1b may move in orbit until a signal of satellite 1c starts to cover the area 1, and a cell 1c is generated to continue to provide a service for the UE 1. The rest can be deduced by analogy. In other words, for the area 1, as a plurality of satellites move, a cell that can cover the area 1 may be continuously generated in the area 1, and an existence time of cells that are adjacent in time may overlap, to continuously provide a service for the UE 1 and avoid service interruption.

It may be understood that, for service principles of the area 2 and the area 3, refer to related descriptions of the area 1. Details are not described again. In a network design, neighboring cells that coexist in a period of time may overlap to ensure seamless coverage. In this specification, it is assumed that an area covered by a signal of a satellite is an ellipse for simplified description, that is, a shape of a cell is usually a circle or an ellipse, so that the neighboring cells that coexist in a period of time may overlap with each other. In the design, the shape of the cell may vary due to different beam policies. For example, when a cell 1a and a cell 2a that are adjacent coexist, the cell 1a may not only cover the area 1, but also cover at least a part of the area 2. Similarly, the cell 2a may not only cover the area 2, but also cover at least a part of the area 1, to provide a service for the at least a part of the area 1. The cell 1a and the cell 2a may also be referred to as neighboring cells. For another example, when the cell 1a and a cell 3a that are adjacent coexist in a period of time, the cell 1a may not only cover the area 1, but also cover at least a part of the area 3. Similarly, the cell 3a may not only cover the area 3, but also cover at least a part of the area 1, to provide a service for the at least a part of the area 1. The cell 1a and the cell 3a may also be referred to as neighboring cells. In other words, when the cell 1a, the cell 2a, and the cell 3a coexist in a period of time, the UE 1 may be located in a coverage area of the cell 1a, that is, receive a signal from the satellite 1a based on a location of the UE 1, and the UE 1 may alternatively be located in coverage areas/a coverage area of the cell 2a and/or the cell 3a, that is, receive signals/a signal from the satellite 2a and/or the satellite 3a.

A cell that covers the area 1 has time validity. Therefore, when a cell in which the UE 1 is located is about to disappear, the UE 1 may perform signal measurement, to access a new cell, so as to ensure that the UE 1 can continue to obtain a service. Alternatively, when the UE 1 is about to move out of a coverage area of the cell in which the UE 1 is located, the UE 1 may also perform signal measurement, to access a new cell, so as to ensure that the UE 1 can continue to obtain a service.

For example, the cell in which the UE 1 is located is the cell 1a. A base station may broadcast, to the UE 1 via a system information block (system information block, SIB), the service end time of the cell 1a, and notify the UE 1 of all potential neighboring cells of the cell 1a. All the potential neighboring cells of the cell 1a may be cells that can coexist with the cell 1a in a period of time and can cover at least a part of the area 1, for example, may include the cell 1b, the cell 2a, a cell 2b, the cell 3a, and a cell 3b. The UE 1 may perform signal measurement on all the potential neighboring cells of the cell 1a before the service end time of the cell 1a. However, at different moments before the service end time of the cell 1a, potential neighboring cells that actually exist are also different. For example, at a moment t1, potential neighboring cells that actually exist include only the cell 2a and the cell 3a; at a moment t2, potential neighboring cells that actually exist include only the cell 2a, the cell 3a, and the cell 3b; and at a moment t3, potential neighboring cells that actually exist include only the cell 2b and the cell 3b. In other words, if the UE performs signal measurement on all the potential neighboring cells of the cell 1a, the UE may perform signal measurement on a potential neighboring cell that actually does not exist, resulting in measurement redundancy and an increase in power consumption of the UE.

For another example, the cell in which the UE 1 is located is the cell 1a. The base station may broadcast the service start time and the service end time of the cell 1a, and service start times and service end times of all the potential neighboring cells of the cell 1a to the UE 1 via the SIB. In this way, when the UE 1 performs signal measurement at a moment before the service end time of the cell 1a, the UE 1 may determine, based on the service start time and the service end time of the cell 1a and the service start times and the service end times of all the potential neighboring cells of the cell 1a, a potential neighboring cell that actually exists at the moment, so that the UE 1 may perform signal measurement on only the potential neighboring cell that actually exists. For example, at the moment t1, the UE 1 may perform signal measurement on only the cell 2a and the cell 3a; at the moment t2, the UE 1 may perform signal measurement on only the cell 2a, the cell 3a, and the cell 3b; and at the moment t3, the UE 1 may perform signal measurement on only the cell 2b and the cell 3b. Therefore, in this manner, measurement redundancy of the UE can be avoided, and power consumption of the UE can be reduced. However, broadcasting the service start times and the service end times of all the potential neighboring cells causes large SIB overheads, and communication efficiency is reduced.

For the foregoing technical problem, embodiments of this application provide the following technical solutions, to reduce overheads of configuration information and improve communication efficiency.

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5G mobile communication system, for example, an NR system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. Terms "of (of)", "corresponding, relevant (corresponding, relevant)", and "corresponding (corresponding)" may be sometimes interchangeably used. It should be noted that meanings expressed by the terms are matchable when differences of the terms are not emphasized. In addition, "/" mentioned in this application may indicate an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding of embodiments of this application, a communication system shown in FIG. 4 is first used as an example to describe in detail a communication system usable in embodiments of this application. For example, FIG. 4 is a diagram 1 of an architecture of a communication system to which a cell determining method is applicable according to an embodiment of this application.

As shown in FIG. 4, the communication system mainly includes a terminal and a network device.

The terminal may be a terminal having a transceiver function, or a chip or a chip system that may be disposed in a terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The network device may be a device like an unmanned aerial vehicle or a high altitude platform station, for example, a satellite applicable to the NTN communication shown in FIG. 1 or FIG. 2. Alternatively, the network device may be a terrestrial device, for example, an access network (access network, AN) device, or may be referred to as a radio access network (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), such as a baseband unit (building baseband unit, BBU), a central unit (central unit, CU), or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, a 6G access network device like a 6G base station. Alternatively, in the next-generation mobile communication system, the network device may be named in another manner, which falls within the protection scope of embodiments of this application. This is not limited in this application.

In this embodiment of this application, the network device may obtain configuration information, and send the configuration information. The configuration information may include configuration information of a first cell set, the configuration information of the first cell set includes service times during which at least two cells in the first cell set provide services for a target object, and the first cell set is a set of cells that provide services for the target object. In this way, the terminal may obtain the configuration information, and determine a first to-be-measured cell in the first cell set based on the configuration information of the first cell set, to perform measurement. In other words, a network may group all cells, cells that can provide services for a same object are considered as a cell set, and different objects may correspond to different cell sets. In this way, for the target object, the configuration information may indicate only the service times during which the at least two cells in the first cell set in all the cells provide services for the target object. This reduces overheads of the configuration information and improves communication efficiency.

For ease of understanding, the following specifically describes a cell determining method provided in this embodiment of this application with reference to FIG. 5.

For example, FIG. 5 is a schematic flowchart of a cell determining method according to an embodiment of this application. The method is applicable to communication between the network device and the terminal in the foregoing communication system.

As shown in FIG. 5, a procedure of the cell determining method is as follows:
S501: The network device obtains configuration information.

The configuration information may include configuration information of a first cell set. The configuration information of the first cell set may include service times during which at least two cells in the first cell set provide services for a target object, and the service times are denoted as a service time of the first cell set. Optionally, the configuration information of the first cell set may further include identifiers of the at least two cells in the first cell set, for example, physical cell identifiers (physical cell identifiers, PCIs), or any other possible cell identifiers. This is not limited.

The first cell set may be a set of cells that provide services for the target object. For example, the first cell set may be a set of cells that provide services for the target object in a time sequence, for example, a set of cells that are of different satellites and that provide services for the target object in a time sequence, to ensure that the target object can continuously obtain services and avoid service interruption. It can be learned that the at least two cells in the first cell set may be understood as at least two serving cells provided by different satellites. These satellites may be low earth orbit satellites mentioned in the foregoing NTN communication, or satellites in any other possible forms. This is not limited. These satellites may be satellites in a same orbit, or may be satellites with a same trajectory. This is not limited. The target object may be any one of the following: a target area, a target terrestrial station, a target base station, a target terminal, or an object in any other possible form. This is not limited. For the target area, the terminal may be located in the target area. For the target terrestrial station or the target base station, the target terrestrial station or the target base station may provide a service for the terminal. For the target terminal, the target terminal may be the terminal, or may be another terminal that obtains a service via the terminal. In this case, the terminal may also be understood as a relay terminal, and the target terminal may be understood as a remote terminal.

The service time of the first cell set may include at least one of the following: service start times of the at least two cells in the first cell set or service end times of the at least two cells in the first cell set. In other words, for cells that can provide services for a same target object, for example, cells in the first cell set, these cells can usually provide services for the target object in a time sequence. In this case, cells that may provide services for the target object at a time point may also be determined based on only service start times or service end times of the cells. Therefore, the configuration information may indicate only the service start times or the service end times at which the at least two cells in the first cell set provide services for the target object, so that overheads of the configuration information can be further reduced, and communication efficiency can be further improved.

For example, the service start times of the at least two cells in the first cell set may be times at which the at least two cells start to provide services for the target object, or times at which the at least two cells may start to provide services for the target object. For example, for any one of the at least two cells, if a satellite that provides the cell runs in orbit until a beam of the satellite can irradiate the target object, the satellite generates the cell, to start to provide a service for the target object, and this moment is a service start time of the cell. The service start times of the at least two cells in the first cell set may be specifically UTC, so that the terminal determines times at which these cells can start to provide services. Alternatively, the service start times of the at least two cells in the first cell set may be time offsets relative to reference UTC. The reference UTC may be a service start time of another cell other than the at least two cells in the first cell set, or the reference UTC may be any other possible time point. This is not limited.

It may be understood that, because the at least two cells in the first cell set provide services for the target object in a time sequence, the service start times of the cells may be determined by adding a time offset to the reference UTC. For example, the reference UTC is the service start time of the another cell. When duration of service times is the same, the time offset may be the service time, and the service start times of the at least two cells may be determined by adding a corresponding quantity of time offsets to the reference UTC. In this case, according to a service sequence, a quantity of cells between the at least two cells and the another cell is equal to a quantity of time offsets that are added. In this case, the configuration information of the first cell set may indicate reference UTC and one time offset, to further reduce overheads of the configuration information.

For ease of understanding, the following uses an example for description.

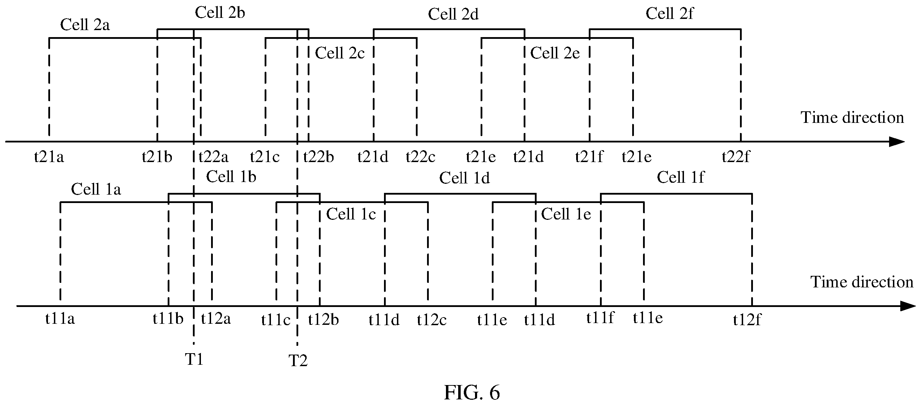

As shown in FIG. 6, a cell set 1 includes a cell 1a, a cell 1b, a cell 1c, a cell 1d, a cell 1e, and a cell 1f.

Case 1: An example of configuration information of the cell set 1 may be shown in Table 1.

**Table 1**

| Cell set | Cell identifier | Cell configuration |
|---|---|---|
| Cell set 1 | PCI#1a | Service start time t11a |
| | PCI#1b | Service start time t11b |
| | PCI#1c | Service start time t11c |
| | PCI#1d | Service start time t11d |
| | PCI#1e | Service start time t11e |
| | PCI#1f | Service start time t11f |

It can be learned from Table 1 that, a service start time of each cell in the cell 1a to the cell 1f may be UTC, so that the terminal directly determines a time at which each cell in the cell 1a to the cell 1f starts to provide a service.

Case 2: An example of configuration information of the cell set 1 may be shown in Table 2.

**Table 2**

| Cell set | Cell identifier | Cell configuration |
|---|---|---|
| Cell set 1 | PCI#1a | Service start time t11a |
| | PCI#1b | Time offset Δt1 |
| | PCI#1c | |
| | PCI#1d | |
| | PCI#1e | |
| | PCI#1f | |

It can be learned from Table 2 that a service start time of the cell 1a may be UTC and is used as reference UTC. A PCI sequence of the PCI#1a to the PCI#1f may implicitly indicate a service sequence of the cell 1a to the cell 1f. The service start time t11a may be used by the terminal to directly determine a time at which the cell 1a starts to provide a service. The service sequence of the cell 1a to the cell 1f and the time offset Δt1 may be jointly used by the terminal to determine times at which the cell 1b to the cell 1f start to provide services. For example, a service ranking of the PCI#1b is one sequential position after that of the PCI#1a, and a service start time of the cell 1b is the service start time t11a+1*time offset Δt1; a service ranking of the PCI#1c is two sequential positions after that of the PCI#1a, and a service start time of the cell 1c is the service start time t11a+2*time offset Δt1; and a service ranking of the PCI#1c is three sequential positions after that of the PCI#1a, and a service start time of the cell 1c is the service start time t11a+3*time offset Δt1. The rest can be deduced by analogy. In addition, that the service start time of the cell 1a is used as the reference UTC is merely an example, and this is not limited. A service start time of any one of the cell 1a to the cell 1f may be used as the reference UTC.

For another example, the service end times of the at least two cells in the first cell set may be times at which the at least two cells stop providing services for the target object, or times at which the at least two cells may stop providing services for the target object. For example, for any one of the at least two cells, if a satellite that provides the cell runs in orbit until a beam of the satellite cannot irradiate the target object, the cell that provides a service for the target object disappears and stops providing a service for the target object, and this moment is a service end time of the cell. Similar to the service start times, the service end times of the at least two cells in the first cell set may also be UTC, so that the terminal determines times at which services of these cells end. Alternatively, the service end times of the at least two cells in the first cell set may be time offsets relative to reference UTC, to further reduce overheads of the configuration information.

For ease of understanding, refer to FIG. 6. The foregoing example is further described.

Case 3: An example of configuration information of the cell set 1 may be shown in Table 3.

**Table 3**

| Cell set | Cell identifier | Cell configuration |
|---|---|---|
| Cell set 1 | PCI#1a | Service end time t12a |
| | PCI#1b | Service end time t12b |
| | PCI#1c | Service end time t12c |
| | PCI#1d | Service end time t12d |
| | PCI#1e | Service end time t12e |
| | PCI#1f | Service end time t12f |

It can be learned from Table 3 that, a service end time of each cell in the cell 1a to the cell 1f may be UTC, so that the terminal directly determines a time at which each cell in the cell 1a to the cell 1f stops providing a service.

Case 4: An example of configuration information of the cell set 1 may be shown in Table 4.

**Table 4**

| Cell set | Cell identifier | Cell configuration |
|---|---|---|
| Cell set 1 | PCI#1a | Service end time t11a |
| | PCI#1b | Time offset Δt1 |
| | PCI#1c | |
| | PCI#1d | |
| | PCI#1e | |
| | PCI#1f | |

It can be learned from Table 4 that a service end time of the cell 1a may be UTC and is used as reference UTC. A PCI sequence of the PCI#1a to the PCI#1f may implicitly indicate a service sequence of the cell 1a to the cell 1f. The service end time t12a may be used by the terminal to directly determine a time at which the cell 1a stops providing a service. The service sequence of the cell 1a to the cell 1f and the time offset Δt1 may be jointly used by the terminal to determine times at which the cell 1b to the cell 1f stop providing services. For example, a service ranking of the PCI#1b is one sequential position after that of the PCI#1a, and a service end time of the cell 1b is the service end time t11a+1*time offset Δt1; a service ranking of the PCI#1c is two sequential positions after that of the PCT#1a, and a service end time of the cell 1c is the service end time t11a+2*time offset Δt1; and a service ranking of the PCI#1c is three sequential positions after that of the PCI#1a, and a service end time of the cell 1c is the service end time t11a+3*time offset Δt1. The rest can be deduced by analogy. In addition, that the service end time of the cell 1a is used as the reference UTC is merely an example, and this is not limited. A service end time of any one of the cell 1a to the cell 1f may be used as the reference UTC.

In addition, the service time of the first cell set may further include any other possible time, for example, an intermediate time of the at least two cells in the first cell set. The intermediate time may be located between the service start times and the service end times of the at least two cells, and may be a time agreed upon by the terminal and the network device, so that the terminal roughly determines the service start times and/or the service end times of the at least two cells.

It may be understood that the configuration information of the first cell set may further include other information of the at least two cells in the first cell set, such as a frequency and a subcarrier spacing. Details are not described again.

It may be further understood that the cell mentioned in embodiments of this application may alternatively be understood as a beam (beam), a synchronization signal-physical broadcast channel (physical broadcast channel, PBCH) block (synchronization signal and PBCH block, SSB), or a pilot, for example, a (de-modulation reference signal, DMRS) de-modulation reference signal port or a channel state information reference signal (channel state information reference signal, CSI-RS) port. The cell set mentioned in embodiments of this application may alternatively be understood as a beam set, a PBCH set, or a pilot set, for example, a DMRS port set or a CSI-RS port set. This is not limited.

In this embodiment of this application, the configuration information of the first cell set may be used by the terminal to determine a to-be-measured cell in the first cell set. The to-be-measured cell is a cell that needs to be measured by the terminal at a corresponding time point. For example, a service end time of the to-be-measured cell may be before the time point, or a service start time of the to-be-measured cell may be after the time point. For a specific implementation principle, refer to related descriptions of S503. Details are not described.

S502: The network device sends the configuration information. The terminal obtains the configuration information.

The network device may broadcast the configuration information, for example, broadcast a SIB or any other possible information element carrying the configuration information. Alternatively, the network device may send the configuration information to the terminal in a directional manner, for example, send a radio resource control (radio resource control, RRC) message carrying the configuration information. Correspondingly, the terminal may receive the configuration information from the network device. Certainly, if the terminal is preconfigured with the configuration information, the terminal may alternatively directly obtain the configuration information locally.

S503: The terminal determines a first to-be-measured cell in the first cell set based on the configuration information of the first cell set.

The first to-be-measured cell may be a cell that needs to be measured at a first time in the first cell set. The first time may be a time point at which the terminal determines that cell measurement needs to be performed. For example, when the terminal determines that the terminal is located at an edge of a cell in which the terminal is currently located, or a cell in which the terminal is currently located is about to stop providing a service, the terminal determines that cell measurement needs to be performed. A service end time of the first to-be-measured cell may be before the first time, or a service start time of the first to-be-measured cell may be after the first time.

In a possible implementation, the service start time is used as an example. The at least two cells in the first cell set include a first cell and a second cell whose service start times are adjacent. The first time is after the service start time of the first cell, the first time is before the service start time of the second cell, and the first to-be-measured cell includes the first cell. In other words, the terminal may determine the first cell as the first to-be-measured cell, to perform measurement on the second cell. It may be understood that, to ensure service continuity, a service time of the first cell and a service time of the second cell usually overlap. For example, when the second cell has started to provide a service, the first cell has not stopped providing a service. In this case, if the first time is between the service start time of the first cell and the service start time of the second cell, the first cell is providing a service. Therefore, the terminal may perform measurement on the first cell that is providing a service, and does not need to perform measurement on the second cell that has not started to provide a service, so as to avoid measurement redundancy and reduce power consumption of the terminal.

Optionally, the at least two cells in the first cell set may further include a third cell whose service start time is adjacent to the service start time of the first cell, the service start time of the third cell is before the service start time of the first cell, and the first to-be-measured cell further includes the third cell. In other words, the terminal may determine the third cell as the first to-be-measured cell, to perform measurement on the third cell. It may be understood that the service time of the first cell and a service time of the third cell usually overlap. For example, when the first cell starts to provide a service, the third cell has not stopped providing a service, to ensure service continuity. In this case, the third cell may have not stopped providing a service at the first time. Therefore, the terminal needs to perform measurement on the third cell that may provide a service, to ensure that the terminal can discover more cells that are providing services.

Certainly, whether the terminal determines the third cell as the first to-be-measured cell may further depend on a length of a time between the first time and the service start time of the first cell. For example, the time between the first time and the service start time of the first cell is long. In this case, it is probable that the third cell has stopped providing a service. Therefore, the terminal may not determine the third cell as the first to-be-measured cell, and does not perform measurement on the third cell. For another example, the time between the first time and the service start time of the first cell is short. In this case, it is probable that the third cell has not stopped providing a service. Therefore, the terminal may determine the third cell as the first to-be-measured cell, and perform measurement on the third cell.

For ease of understanding, refer to FIG. 6. The foregoing example is further described.

For Case 1 or Case 2, at the first time T1, the terminal may determine, based on the cell 1a to the cell 1f, that the cell 1a may have not stopped providing a service, the cell 1b has started to provide a service, and the cell 1c has not started to provide a service. Therefore, the terminal may determine that the cell 1a and the cell 1b are the first to-be-measured cells, and perform measurement on the cell 1a and the cell 1b.

Alternatively, in another possible implementation, the service end time is used as an example. The at least two cells in the first cell set include a first cell and a second cell whose service end times are adjacent. The first time is after the service end time of the first cell, the first time is before the service end time of the second cell, and the first to-be-measured cell includes the second cell. In other words, the terminal determines the second cell as the first to-be-measured cell, to perform measurement on the second cell. It may be understood that, to ensure service continuity, a service time of the first cell and a service time of the second cell usually overlap. For example, when the first cell stops providing a service, the second cell has started to provide a service. In this case, if the first time is between the service end time of the first cell and the service end time of the second cell, the second cell is providing a service. Therefore, the terminal may perform measurement on the second cell that is providing a service, and does not need to perform measurement on the first cell that has stopped providing a service, so as to avoid measurement redundancy and reduce power consumption of the terminal.

Optionally, the at least two cells in the first cell set further include a third cell whose service end time is adjacent to the service end time of the second cell, the service end time of the third cell is after the service end time of the second cell, and the first to-be-measured cell further includes the third cell. In other words, the terminal determines the third cell as the first to-be-measured cell, to perform measurement on the third cell. It may be understood that the service time of the second cell and a service time of the third cell usually overlap. For example, before the second cell stops providing a service, the third cell has started to provide a service, to ensure service continuity. In this case, the third cell may have started to provide a service at the first time, or the third cell is a potential serving cell. Therefore, the terminal needs to perform measurement on the third cell that may provide a service, to ensure that the terminal can discover more cells that are providing services.

Certainly, whether the terminal determines the third cell as the first to-be-measured cell may further depend on a length of a time between the first time and the service end time of the second cell. For example, the time between the first time and the service end time of the second cell is long. In this case, it is still early that the second cell stops providing a service, and it is probable that the third cell has not started to provide a service. Therefore, the terminal may not determine the third cell as the first to-be-measured cell, and does not perform measurement on the third cell. For another example, the time between the first time and the service end time of the second cell is short. In this case, the second cell is about to stop providing a service, and it is probable that the third cell has started to provide a service. Therefore, the terminal may determine the third cell as the first to-be-measured cell, and perform measurement on the third cell.

For ease of understanding, refer to FIG. 6. The foregoing example is further described.

For Case 3 or Case 4, at the first time T2, the terminal may determine, based on the cell 1a to the cell 1f, that the cell 1a has stopped providing a service, the cell 1b has not stopped providing a service, and the cell 1c may have started to provide a service. Therefore, the terminal may determine that the cell 1b and the cell 1c are the first to-be-measured cells, and perform measurement on the cell 1b and the cell 1c.

In conclusion, the network may group all cells, cells that can provide services for a same object are considered as a cell set, and different objects may correspond to different cell sets. In this way, for the target object, the configuration information may indicate only the service times during which the at least two cells in the first cell set in all the cells provide services for the target object. This reduces overheads of the configuration information and improves communication efficiency.

Optionally, with reference to the foregoing embodiment, the configuration information may further include configuration information of a second cell set. The configuration information of the second cell set may include service times of at least two cells in the second cell set. Optionally, the configuration information of the second cell set may further include identifiers of the at least two cells in the second cell set, for example, PCIs, or any other possible cell identifiers. This is not limited.

The second cell set may be a set of cells that provide services for another object. For example, the second cell set may be a set of cells that provide services for the another object in a time sequence, and may be specifically a set of cells that are of different satellites and that provide services for the another object in a time sequence, to ensure that the another object can continuously obtain services and avoid service interruption. It can be learned that, similar to those in the first cell set, the at least two cells in the second cell set may also be understood as at least two serving cells provided by different satellites. For details, refer to the related descriptions of the first cell set. Details are not described again. The another object may be an object different from the foregoing target object, and includes any one of the following: another area, another terrestrial station, another base station, or another terminal, or an object in any other possible form. This is not limited.

The service times of the at least two cells in the second cell set may include at least one of the following: service start times of the at least two cells in the second cell set or service end times of the at least two cells in the second cell set. It may be learned that, similar to that of the first cell set, cells that may provide services at a time point may also be determined based on only the service start times or the service end times of the at least two cells in the second cell set. Therefore, the configuration information may alternatively indicate only the service start times or the service end times at which the at least two cells in the second cell set provide services, so that overheads of the configuration information can be further reduced, and communication efficiency can be further improved.

For example, the service start times of the at least two cells in the second cell set may be times at which the at least two cells start to provide services for the another object, or times at which the at least two cells may start to provide services. For a specific implementation, refer to the foregoing related descriptions. Details are not described again. The service start times of the at least two cells in the second cell set may be specifically UTC, so that the terminal determines times at which these cells can start to provide services. Alternatively, the service start times of the at least two cells in the second cell set may be time offsets relative to reference UTC. The reference UTC may be a service start time of a cell other than the at least two cells in the second cell set, or the reference UTC may be any other possible time point, for example, a service start time or a service end time of a cell in the first cell set. This is not limited.

It may be understood that, similar to that of the first cell set, when the reference UTC is the service start time of the cell other than the at least two cells in the second cell set, and duration of service times of any two cells in the second cell set is the same, the configuration information of the second cell set may alternatively indicate reference UTC and one time offset, to further reduce overheads of the configuration information. In addition, when the reference UTC is a service start time or a service end time of a cell in the first cell set, there may be a plurality of time offsets, and each time offset may be a time offset between a service start time of a cell in the second cell set and the reference UTC. Alternatively, when the reference UTC is a service start time or a service end time of a cell in the first cell set, and duration of service times of any two cells in the second cell set is the same, there may be two time offsets. One time offset may be a time offset between a service start time of a target cell in the second cell set and the reference UTC, and the other time offset may be service times of any two cells in the second cell set. In this case, a service start time of a cell other than the target cell in the second cell set may be determined by adding a corresponding quantity of time offsets to the service start time of the target cell. For example, according to a service sequence, a quantity of cells between the target cell and the cell other than the target cell in the second cell set is equal to a quantity of time offsets that are added. In this case, the configuration information of the second cell set may indicate reference UTC and two time offsets, to reduce overheads of the configuration information.

For ease of understanding, the following describes the foregoing example.

As shown in FIG. 6, a cell set 2 may include a cell 2a, a cell 2b, a cell 2c, a cell 2d, a cell 2e, and a cell 2f.

Case A: An example of configuration information of the cell set 2 may be shown in Table 5.

**Table 5**

| Cell set | Cell identifier | Cell configuration |
|---|---|---|
| Cell set 2 | PCI#2a | Service start time t21a |
| | PCI#2b | Service start time t21b |
| | PCI#2c | Service start time t21c |
| | PCI#2d | Service start time t21d |
| | PCI#2e | Service start time t21e |
| | PCI#2f | Service start time t21f |

It can be learned from Table A that, a service start time of each cell in the cell 2a to the cell 2f may be UTC, so that the terminal directly determines a time at which each cell in the cell 2a to the cell 2f starts to provide a service.

Case B: An example of configuration information of the cell set 2 may be shown in Table 6.

**Table 6**

| Cell set | Cell identifier | Cell configuration |
|---|---|---|
| Cell set 2 | PCI#2a | Service start time t21a |
| | PCI#2b | Time offset Δt2 |
| | PCI#2c | |
| | PCI#2d | |
| | PCI#2e | |
| | PCI#2f | |

It can be learned from Table 6 that a service start time of the cell 2a may be UTC and is used as reference UTC. A PCI sequence of the PCI#2a to the PCI#2f may implicitly indicate a service sequence of the cell 2a to the cell 2f. The service start time t21a may be used by the terminal to directly determine a time at which the cell 2a starts to provide a service. The service sequence of the cell 2a to the cell 2f and the time offset Δt2 may be jointly used by the terminal to determine times at which the cell 2b to the cell 2f start to provide services. For example, a service ranking of the PCI#2b is one sequential position after that of the PCI#2a, and a service start time of the cell 2b is the service start time t21a+1*time offset Δt2; and a service ranking of the PCI#2c is two sequential positions after that of the PCI#2a, and a service start time of the cell 2c is the service start time t21a+2*time offset Δt2. The rest can be deduced by analogy. In addition, that the service start time of the cell 2a is used as the reference UTC is merely an example, and this is not limited. A service start time of any one of the cell 2a to the cell 2f may be used as the reference UTC.

Case C: An example of configuration information of the cell set 2 may be shown in Table 7.

**Table 7**

| Cell set | Cell identifier | Cell configuration |
|---|---|---|
| Cell set 2 | PCI#2a | Service start time t11a |
| | | Time offset Δt21 |
| | PCI#2b | Time offset Δt22 |
| | PCI#2c | |
| | PCI#2d | |
| | PCI#2e | |
| | PCI#2f | |

It can be learned from Table 7 that the service start time of the cell 1a may be UTC and is used as reference UTC of the cell 2a, so that the service start time of the cell 2a may be determined based on the service start time t11a and the time offset Δt21, for example, the service start time t11a+the time offset Δt21. The service start time of the cell 2a may be used as reference UTC of the cell 2b to the cell 2f. A PCI sequence of the PCI#2a to the PCI#2f may implicitly indicate a service sequence of the cell 2a to the cell 2f. The service sequence of the cell 2a to the cell 2f and the time offset Δt22 may be jointly used by the terminal to determine times at which the cell 2b to the cell 2f start to provide services. For example, a service ranking of the PCI#2b is one sequential position after that of the PCI#2a, and a service start time of the cell 2b is the service start time t11a+the time offset Δt21+the time offset Δt22; and a service ranking of the PCI#2c is two sequential positions after that of the PCI#2a, and a service start time of the cell 2c is the service start time t11a+the time offset Δt21+2*time offset Δt2. The rest can be deduced by analogy. In addition, that the service start time of the cell 2a is used as the reference UTC of the cell 2b to the cell 2f is merely an example, and this is not limited. A service start time of any cell of the cell 2a to the cell 2f may be used as the reference UTC.

For another example, the service end times of the at least two cells in the second cell set may be times at which the at least two cells stop providing services for the another object, or times at which the at least two cells may stop providing services for the another object. For a specific implementation, refer to the foregoing related descriptions. Details are not described again. Similar to the service start times, the service end times of the at least two cells in the second cell set may also be UTC, so that the terminal determines times at which services of these cells end. Alternatively, the service end times of the at least two cells in the second cell set may be time offsets relative to reference UTC, to further reduce overheads of the configuration information.

For ease of understanding, refer to FIG. 6. The foregoing example is further described.

Case D: An example of configuration information of the cell set 2 may be shown in Table 8.

**Table 8**

| Cell set | Cell identifier | Cell configuration |
|---|---|---|
| Cell set 2 | PCI#2a | Service end time t22a |
| | PCI#2b | Service end time t22b |
| | PCI#2c | Service end time t22c |
| | PCI#2d | Service end time t22d |
| | PCI#2e | Service end time t22e |
| | PCI#2f | Service end time t22f |

It can be learned from Table 8 that, a service end time of each cell in the cell 2a to the cell 2f may be UTC, so that the terminal directly determines a time at which each cell in the cell 2a to the cell 2f stops providing a service.

Case E: An example of configuration information of the cell set 2 may be shown in Table 9.

**Table 9**

| Cell set | Cell identifier | Cell configuration |
|---|---|---|
| Cell set 2 | PCI#2a | Service end time t22a |
| | PCI#2b | Time offset Δt1 |
| | PCI#2c | |
| | PCI#2d | |
| | PCI#2e | |
| | PCI#2f | |

It can be learned from Table 9 that the service end time of the cell 2a may be UTC and is used as reference UTC. A PCI sequence of the PCI#2a to the PCI#2f may implicitly indicate a service sequence of the cell 2a to the cell 2f. The service end time t22a may be used by the terminal to directly determine a time at which the cell 2a stops providing a service. The service sequence of the cell 2a to the cell 2f and the time offset Δt2 may be jointly used by the terminal to determine times at which the cell 2b to the cell 2f stop providing services. For example, a service ranking of the PCI#2b is one sequential position after that of the PCI#2a, and a service end time of the cell 2b is the service end time t22a+1*time offset Δt2; and a service ranking of the PCI#2c is two sequential positions after that of the PCI#2a, and a service end time of the cell 2c is the service end time t22a+2*time offset Δt2. The rest can be deduced by analogy. In addition, that the service end time of the cell 2a is used as the reference UTC is merely an example, and this is not limited. A service end time of any one of the cell 2a to the cell 2f may be used as the reference UTC.

Case F: An example of configuration information of the cell set 2 may be shown in Table 10.

**Table 10**

| Cell set | Cell identifier | Cell configuration |
|---|---|---|
| Cell set 2 | PCI#2a | Service end time t12a |
| | | Time offset Δt21 |
| | PCI#2b | Time offset Δt22 |
| | PCI#2c | |
| | PCI#2d | |
| | PCI#2e | |
| | PCI#2f | |

It can be learned from Table 10 that the service end time of the cell 1a may be UTC and is used as reference UTC of the cell 2a, so that the service end time of the cell 2a may be determined based on the service end time t12a and the time offset Δt21, for example, the service end time t12a+the time offset Δt21. The service end time of the cell 2a may be used as the reference UTC of the cell 2b to the cell 2f. A PCI sequence of the PCI#2a to the PCI#2f may implicitly indicate a service sequence of the cell 2a to the cell 2f. The service sequence of the cell 2a to the cell 2f and the time offset Δt22 may be jointly used by the terminal to determine times at which the cell 2b to the cell 2f start to provide services. For example, a service ranking of the PCI#2b is one sequential position after that of the PCI#2a, and a service end time of the cell 2b is the service end time t12a+the time offset Δt21+the time offset Δt22; and a service ranking of the PCI#2c is two sequential positions after that of the PCI#2a, and a service end time of the cell 2c is the service end time t12a+the time offset Δt21+2*time offset Δt2. The rest can be deduced by analogy. In addition, that the service end time of the cell 2a is used as the reference UTC of the cell 2b to the cell 2f is merely an example, and this is not limited. A service end time of any cell of the cell 2a to the cell 2f may be used as the reference UTC.

In addition, the service time of the second cell set may further include any other possible time, for example, an intermediate time of the at least two cells in the first cell set. The intermediate time may be located between the service start times and the service end times of the at least two cells, and may be a time agreed upon by the terminal and a network, so that the terminal roughly determines the service start times and/or the service end times of the at least two cells.

It may be understood that, the foregoing example is an example in which the configuration information of the cell set 1 and the configuration information of the cell set 2 are indicated through different entries, and this is not limited. For example, the configuration information of the cell set 1 and the configuration information of the cell set 2 may alternatively be indicated through one entry.

It may be further understood that the configuration information of the second cell set may further include other information of the at least two cells in the second cell set, such as a frequency and a subcarrier spacing. Details are not described again.

In this embodiment of this application, the at least two cells in the second cell set may partially overlap with the at least two cells in the first cell set, and are used as neighboring cells of the at least two cells in the first cell set. In this case, when the at least two cells in the second cell set provide services for the another object, the at least two cells in the second cell set may also provide services for the target object. For example, the at least two cells in the second cell set may cover a part of the target area, to provide services for the part of the target area. Alternatively, the target terrestrial station, the target base station, or the target terminal is located in an overlapping area between the at least two cells in the second cell set and the at least two cells in the first cell set, and the at least two cells in the second cell set may also provide services for the target terrestrial station, the target base station, or the target terminal. Therefore, the terminal may further determine a second to-be-measured cell in the second cell set based on the configuration information of the second cell set. The second to-be-measured cell may be a cell that is in the second cell set and that may provide a service for the target object at the first time, that is, a cell that needs to be measured at the first time in the second cell set, so that the terminal can perform measurement on the second to-be-measured cell that may provide a service for the target object, to ensure that the terminal can discover more cells that are providing services.

In a possible implementation, the service start time is used as an example. The at least two cells in the second cell set may include a fourth cell and a fifth cell whose service start times are adjacent. The first time is after a service start time of the fourth cell, the first time is before a service start time of the fifth cell, and the second to-be-measured cell includes the fourth cell. In other words, the terminal may determine the fourth cell as the second to-be-measured cell, to perform measurement on the fourth cell. It may be understood that, to ensure service continuity, a service time of the fourth cell and a service time of the fifth cell usually overlap. For example, when the fifth cell has started to provide a service, the fourth cell has not stopped providing a service. In this case, if the first time is between the service start time of the fourth cell and the service start time of the fifth cell, the fourth cell is providing a service. Therefore, the terminal may perform measurement on the fourth cell that is providing a service, and does not need to perform measurement on the fifth cell that has not started to provide a service, so as to avoid measurement redundancy and reduce power consumption of the terminal.

Optionally, the at least two cells in the second cell set may further include a sixth cell whose service start time is adjacent to the service start time of the fourth cell, the service start time of the sixth cell is before the service start time of the fourth cell, and the second to-be-measured cell further includes the sixth cell. In other words, the terminal may further determine the sixth cell as the second to-be-measured cell, to perform measurement on the sixth cell. It may be understood that the service time of the fourth cell and a service time of the sixth cell usually overlap. For example, when the fourth cell starts to provide a service, the sixth cell has not stopped providing a service, to ensure service continuity. In this case, the sixth cell may have not stopped providing a service at the first time. Therefore, the terminal needs to perform measurement on the sixth cell that may provide a service, to ensure that the terminal can discover more cells that are providing services.

Certainly, whether the terminal determines the sixth cell as the second to-be-measured cell may further depend on a length of a time between the first time and the service start time of the fourth cell. A specific implementation principle is similar to that of the third cell. For details, refer to the third cell. Details are not described again.

For ease of understanding, refer to FIG. 6. The foregoing example is further described.

For Case A or Case B, at the first time t1, the terminal may determine, based on the cell 2a to the cell 2f, that the cell 2a may have not stopped providing a service, the cell 2b has started to provide a service, and the cell 2c has not started to provide a service. Therefore, the terminal may determine that the cell 2a and the cell 2b are the second to-be-measured cells, and perform measurement on the cell 2a and the cell 2b.

Alternatively, in another possible implementation, the service end time is used as an example. The at least two cells in the second cell set may include a fourth cell and a fifth cell whose service end times are adjacent. The first time is after the service end time of the fourth cell, the first time is before the service end time of the fifth cell, and the second to-be-measured cell includes the fifth cell. In other words, the terminal may determine the fifth cell as the second to-be-measured cell, to perform measurement on the fifth cell. It may be understood that, to ensure service continuity, a service time of the fourth cell and a service time of the fifth cell usually overlap. For example, when the fourth cell stops providing a service, the fifth cell has started to provide a service. In this case, if the first time is between the service end time of the fourth cell and the service end time of the fifth cell, the fifth cell is providing a service. Therefore, the terminal may perform measurement on the fifth cell that is providing a service, and does not need to perform measurement on the fourth cell that has stopped providing a service, so as to avoid measurement redundancy and reduce power consumption of the terminal.

Optionally, the second cell set may further include a sixth cell whose service end time is adjacent to the service end time of the fifth cell, the service end time of the sixth cell is after the service end time of the fifth cell, and the second to-be-measured cell further includes the sixth cell. In other words, the terminal may determine the sixth cell as the second to-be-measured cell, to perform measurement on the sixth cell. It may be understood that the service time of the fifth cell and a service time of the sixth cell usually overlap. For example, before the fifth cell stops providing a service, the sixth cell has started to provide a service, to ensure service continuity. In this case, the sixth cell may have started to provide a service at the first time. Therefore, the terminal needs to perform measurement on the sixth cell that may provide a service, to ensure that the terminal can discover more cells that are providing services.

Certainly, whether the terminal determines the sixth cell as the second to-be-measured cell may further depend on a length of a time between the first time and the service end time of the fifth cell. A specific implementation principle is similar to that of the third cell. For details, refer to the third cell. Details are not described again.

For ease of understanding, refer to FIG. 6. The foregoing example is further described.

For Case C or Case D, at the first time t1, the terminal may determine, based on the cell 2a to the cell 2f, that the cell 2a has stopped providing a service, the cell 2b has not stopped providing a service, and the cell 2c may have started to provide a service. Therefore, the terminal may determine that the cell 2b and the cell 2c are the first to-be-measured cells, and perform measurement on the cell 2b and the cell 2c.

It may be understood that, in addition to the at least two cells in the second cell set, the neighboring cells of the at least two cells in the first cell set may further include another cell in another cell set. A specific implementation principle of the neighboring cells is similar to that of the at least two cells in the second cell set. For the specific implementation principle, refer to the description for understanding. Details are not described again.

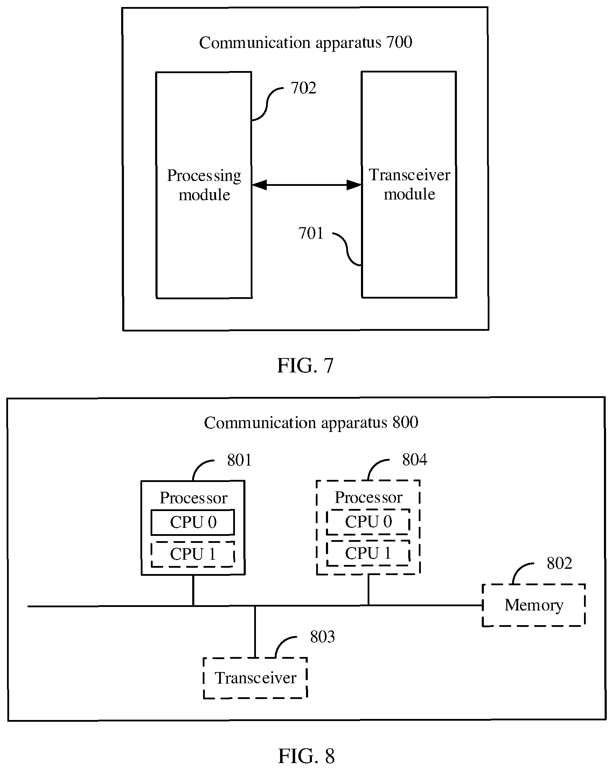

The foregoing describes in detail the cell determining method provided in embodiments of this application with reference to FIG. 5. The following describes in detail a communication apparatus configured to perform the cell determining method provided in embodiments of this application with reference to FIG. 7 and FIG. 8.

FIG. 7 is a diagram 1 of a structure of a communication apparatus according to an embodiment of this application. For example, as shown in FIG. 7, the communication apparatus 700 includes a transceiver module 701 and a processing module 702. The transceiver module 701 is configured to indicate a transceiver function of the communication apparatus 700, and the processing module 702 is configured to perform a function other than the transceiver function of the communication apparatus 700.

For ease of description, FIG. 7 shows only main components of the communication apparatus.

In some embodiments, the communication apparatus 700 may be applied to the communication system shown in FIG. 4, and perform a function of the terminal in the method shown in FIG. 4.

The transceiver module 701 is configured to obtain configuration information. The configuration information includes configuration information of a first cell set, the configuration information of the first cell set includes service times during which at least two cells in the first cell set provide services for a target object, and the first cell set is a set of cells that provide services for the target object. The processing module 702 is configured to determine a first to-be-measured cell in the first cell set based on the configuration information of the first cell set.

In a possible design solution, the service times during which the at least two cells in the first cell set provide services for the target object include at least one of the following: service start times of the at least two cells in the first cell set or service end times of the at least two cells in the first cell set.

Optionally, the at least two cells in the first cell set include a first cell and a second cell whose service end times are adjacent, a first time at which the terminal initiates measurement is after the service end time of the first cell, the first time is before the service end time of the second cell, and the first to-be-measured cell includes the second cell.

Further, the at least two cells in the first cell set further include a third cell whose service end time is adjacent to the service end time of the second cell, the service end time of the third cell is after the service end time of the second cell, and the first to-be-measured cell further includes the third cell.

Optionally, the at least two cells in the first cell set include a first cell and a second cell whose service start times are adjacent, a first time at which the terminal initiates measurement is after the service start time of the first cell, the first time is before the service start time of the second cell, and the first to-be-measured cell includes the first cell.

Further, the at least two cells in the first cell set further include a third cell whose service start time is adjacent to the service start time of the first cell, the service start time of the third cell is before the service start time of the first cell, and the first to-be-measured cell further includes the third cell.

In a possible design solution, the first cell set is a set of cells that provide services for the target object in a time sequence, and may be specifically a set of cells that are of different satellites and that provide services for the target object in a time sequence.

In a possible design solution, the configuration information further includes configuration information of a second cell set, the configuration information of the second cell set includes service times during which at least two cells in the second cell set provide services, and the at least two cells in the second cell set partially overlap with the at least two cells in the first cell set. The processing module 702 is further configured to determine a second to-be-measured cell in the second cell set based on the configuration information of the second cell set.

Optionally, the service times of the at least two cells in the second cell set include at least one of the following: service start times of the at least two cells in the second cell set or service end times of the at least two cells in the second cell set.

Further, the at least two cells in the second cell set include a fourth cell and a fifth cell whose service end times are adjacent, a first time at which the terminal initiates measurement is after the service end time of the fourth cell, the first time is before the service end time of the fifth cell, and the second to-be-measured cell includes the fifth cell.

Further, the at least two cells in the second cell set further include a sixth cell whose service end time is adjacent to the service end time of the fifth cell, the service end time of the sixth cell is after the service end time of the fifth cell, and the second to-be-measured cell further includes the sixth cell.

Further, the at least two cells in the second cell set include a fourth cell and a fifth cell whose service start times are adjacent, a first time at which the terminal initiates measurement is after the service start time of the fourth cell, the first time is before the service start time of the fifth cell, and the second to-be-measured cell includes the fourth cell.

Further, the at least two cells in the second cell set further include a sixth cell whose service start time is adjacent to the service start time of the fourth cell, the service start time of the sixth cell is before the service start time of the fourth cell, and the second to-be-measured cell further includes the sixth cell.

In a possible design solution, the service times of the at least two cells are coordinated universal time UTC, or the service times of the at least two cells are time offsets relative to reference UTC.

In a possible design solution, the target object is any one of the following: a target area, a target terrestrial station, a target base station, or a target terminal.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform a function of the terminal in the method in FIG. 5.

It may be understood that the communication apparatus 700 may be a terminal, may be a chip (system) or another part or component that may be disposed in a terminal, or may be an apparatus including a terminal. This is not limited in this application.

In addition, for technical effect of the communication apparatus 700, refer to the technical effect of the method shown in FIG. 5. Details are not described herein again.

In some embodiments, the communication apparatus 700 may be applied to the communication system shown in FIG. 4, and perform a function of the network device in the method shown in FIG. 5.

The processing module 702 is configured to obtain configuration information, and the transceiver module 701 is configured to send the configuration information. The configuration information includes configuration information of a first cell set. The configuration information of the first cell set includes service times during which at least two cells in the first cell set provide services for a target object. The first cell set is a set of cells that provide services for the target object, and the configuration information of the first cell set is used by a terminal to determine a to-be-measured cell in the first cell set.

In a possible design solution, the service times during which the at least two cells in the first cell set provide services for the target object include at least one of the following: service start times of the at least two cells in the first cell set or service end times of the at least two cells in the first cell set.

In a possible design solution, the first cell set is a set of cells that provide services for the target object in a time sequence.

In a possible design solution, the first cell set is a set of cells that are of different satellites and that provide services for the target object in a time sequence.

In a possible design solution, the configuration information further includes configuration information of a second cell set. The configuration information of the second cell set includes service times of at least two cells in the second cell set. The at least two cells in the second cell set partially overlap with the at least two cells in the first cell set, and the configuration information of the second cell set is used by the terminal to determine a to-be-measured cell in the second cell set.

Optionally, the service times of the at least two cells in the second cell set include at least one of the following: service start times of the at least two cells in the second cell set or service end times of the at least two cells in the second cell set.

In a possible design solution, the service times of the at least two cells are coordinated universal time UTC, or the service times of the at least two cells are time offsets relative to reference UTC.

In a possible design solution, the target object is any one of the following: a target area, a target terrestrial station, a target base station, or a target terminal.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform a function of the network device in the method in FIG. 5.

It may be understood that the communication apparatus 700 may be a terminal, may be a chip (system) or another part or component that may be disposed in a terminal, or may be an apparatus including a terminal. This is not limited in this application.

In addition, for technical effect of the communication apparatus 700, refer to the technical effect of the method shown in FIG. 5. Details are not described herein again.

FIG. 8 is a diagram 2 of a structure of a communication apparatus according to an embodiment of this application. For example, the communication apparatus may be a terminal, or may be a chip (system) or another part or component that may be disposed in the terminal. As shown in FIG. 8, the communication apparatus 800 includes a processor 801. Optionally, the communication apparatus 800 may further include a memory 802 and/or a transceiver 803. The processor 801 is coupled to the memory 802 and the transceiver 803, for example, may be connected through a communication bus.

The following specifically describes each part of the communication apparatus 800 with reference to FIG. 8.

The processor 801 is a control center of the communication apparatus 800, and may be a processor, or may be a general term of a plurality of processing elements. For example, the processor 801 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate arrays, FPGAs).

Optionally, the processor 801 may perform various functions of the communication apparatus 800 by running or executing a software program stored in the memory 802 and invoking data stored in the memory 802, for example, perform the method shown in FIG. 5.

During a specific implementation, in an embodiment, the processor 801 may include one or more CPUs, for example, a CPU 0 and a CPU 1 shown in FIG. 8.

During a specific implementation, in an embodiment, the communication apparatus 800 may alternatively include a plurality of processors, such as the processor 801 and a processor 804 shown in FIG. 8. Each of the processors may be a single-core processor (single-CPU), or may be a multi-core processor (multi-CPU). The processor herein may be one or more devices, circuits, and/or processing cores configured to process data (for example, computer program instructions).

The memory 802 is configured to store a software program for executing the solution of this application, and the processor 801 controls execution of the software program. For a specific implementation, refer to the foregoing method embodiment. Details are not described herein again.

Optionally, the memory 802 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer. However, this is not limited thereto. The memory 802 may be integrated with the processor 801, or may exist independently, and is coupled to the processor 801 through an interface circuit (not shown in FIG. 8) of the communication apparatus 800. This is not specifically limited in embodiments of this application.

The transceiver 803 is configured for communication with another communication apparatus. For example, the communication apparatus 800 is a terminal, and the transceiver 803 may be configured to communicate with a network device or communicate with another terminal device. For another example, the communication apparatus 800 is a network device, and the transceiver 803 may be configured to communicate with a terminal or communicate with another network device.

Optionally, the transceiver 803 may include a receiver and a transmitter (not separately shown in FIG. 8). The receiver is configured to implement a receiving function, and the transmitter is configured to implement a sending function.

Optionally, the transceiver 803 may be integrated with the processor 801, or may exist independently, and is coupled to the processor 801 through an interface circuit (not shown in FIG. 8) of the communication apparatus 800. This is not specifically limited in embodiments of this application.

It may be understood that a structure of the communication apparatus 800 shown in FIG. 8 does not constitute a limitation on the communication apparatus. An actual communication apparatus may include more or fewer components than those shown in the figure, or a combination of a part of the components, or an arrangement of different components.

In addition, for technical effect of the communication apparatus 800, refer to the technical effect of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell determining method, wherein the method comprises:
obtaining, by a terminal, configuration information, wherein the configuration information comprises configuration information of a first cell set, the configuration information of the first cell set comprises service times during which at least two cells in the first cell set provide services for a target object, and the first cell set is a set of cells that provide services for the target object; and
determining, by the terminal, a first to-be-measured cell in the first cell set based on the configuration information of the first cell set.

2. The method according to claim 1, wherein the service times during which the at least two cells in the first cell set provide services for the target object comprise at least one of the following: service start times of the at least two cells in the first cell set or service end times of the at least two cells in the first cell set.

3. The method according to claim 2, wherein the at least two cells in the first cell set comprise a first cell and a second cell whose service end times are adjacent, a first time at which the terminal initiates measurement is after the service end time of the first cell, the first time is before the service end time of the second cell, and the first to-be-measured cell comprises the second cell.

4. The method according to claim 3, wherein the at least two cells in the first cell set further comprise a third cell whose service end time is adjacent to the service end time of the second cell, the service end time of the third cell is after the service end time of the second cell, and the first to-be-measured cell further comprises the third cell.

5. The method according to claim 2, wherein the at least two cells in the first cell set comprise a first cell and a second cell whose service start times are adjacent, a first time at which the terminal initiates measurement is after the service start time of the first cell, the first time is before the service start time of the second cell, and the first to-be-measured cell comprises the first cell.

6. The method according to claim 5, wherein the at least two cells in the first cell set further comprise a third cell whose service start time is adjacent to the service start time of the first cell, the service start time of the third cell is before the service start time of the first cell, and the first to-be-measured cell further comprises the third cell.

7. The method according to any one of claims 1 to 6, wherein the first cell set is a set of cells that provide services for the target object in a time sequence.

8. The method according to claim 7, wherein the first cell set is a set of cells that are of different satellites and that provide services for the target object in a time sequence.

9. The method according to any one of claims 1 to 8, wherein the configuration information further comprises configuration information of a second cell set, the configuration information of the second cell set comprises service times of at least two cells in the second cell set, and the at least two cells in the second cell set partially overlap with the at least two cells in the first cell set; and the method further comprises:
determining, by the terminal, a second to-be-measured cell in the second cell set based on the configuration information of the second cell set.

10. The method according to claim 9, wherein the service times of the at least two cells in the second cell set comprise at least one of the following: service start times of the at least two cells in the second cell set or service end times of the at least two cells in the second cell set.

11. The method according to claim 10, wherein the at least two cells in the second cell set comprise a fourth cell and a fifth cell whose service end times are adjacent, the first time at which the terminal initiates measurement is after the service end time of the fourth cell, the first time is before the service end time of the fifth cell, and the second to-be-measured cell comprises the fifth cell.

12. The method according to claim 11, wherein the at least two cells in the second cell set further comprise a sixth cell whose service end time is adjacent to the service end time of the fifth cell, the service end time of the sixth cell is after the service end time of the fifth cell, and the second to-be-measured cell further comprises the sixth cell.

13. The method according to claim 10, wherein the at least two cells in the second cell set comprise a fourth cell and a fifth cell whose service start times are adjacent, the first time at which the terminal initiates measurement is after the service start time of the fourth cell, the first time is before the service start time of the fifth cell, and the second to-be-measured cell comprises the fourth cell.

14. The method according to claim 13, wherein the at least two cells in the second cell set further comprise a sixth cell whose service start time is adjacent to the service start time of the fourth cell, the service start time of the sixth cell is before the service start time of the fourth cell, and the second to-be-measured cell further comprises the sixth cell.

15. The method according to any one of claims 1 to 14, wherein the service times of the at least two cells are coordinated universal time UTC, or the service times of the at least two cells are time offsets relative to reference UTC.

16. The method according to any one of claims 1 to 15, wherein the target object is any one of the following: a target area, a target terrestrial station, a target base station, or a target terminal.

17. A cell determining method, wherein the method comprises:
obtaining, by a network device, configuration information, wherein the configuration information comprises configuration information of a first cell set, the configuration information of the first cell set comprises service times during which at least two cells in the first cell set provide services for a target object, the first cell set is a set of cells that provide services for the target object, and the configuration information of the first cell set is used by a terminal to determine a to-be-measured cell in the first cell set; and
sending, by the network device, the configuration information.

18. The method according to claim 17, wherein the service times during which the at least two cells in the first cell set provide services for the target object comprise at least one of the following: service start times of the at least two cells in the first cell set or service end times of the at least two cells in the first cell set.

19. The method according to claim 17 or 18, wherein the first cell set is a set of cells that provide services for the target object in a time sequence.

20. The method according to any one of claims 17 to 19, wherein the first cell set is a set of cells that are of different satellites and that provide services for the target object in a time sequence.

21. The method according to any one of claims 17 to 20, wherein the configuration information further comprises configuration information of a second cell set, the configuration information of the second cell set comprises service times of at least two cells in the second cell set, the at least two cells in the second cell set partially overlap with the at least two cells in the first cell set, and the configuration information of the second cell set is used by the terminal to determine a to-be-measured cell in the second cell set.

22. The method according to claim 21, wherein the service times of the at least two cells in the second cell set comprise at least one of the following: service start times of the at least two cells in the second cell set or service end times of the at least two cells in the second cell set.

23. The method according to any one of claims 17 to 22, wherein the service times of the at least two cells are coordinated universal time UTC, or the service times of the at least two cells are time offsets relative to reference UTC.

24. The method according to any one of claims 17 to 23, wherein the target object is any one of the following: a target area, a target terrestrial station, a target base station, or a target terminal.

25. A communication apparatus, wherein the apparatus comprises a module configured to perform the method according to any one of claims 1 to 16.

26. A communication apparatus, wherein the apparatus comprises a module configured to perform the method according to any one of claims 17 to 24.

27. A communication apparatus, wherein the apparatus comprises a processor, the processor is coupled to a memory, and the processor is configured to execute a computer program stored in the memory, so that the apparatus performs the method according to any one of claims 1 to 24.

28. A communication apparatus, wherein the apparatus comprises a processor and a memory, the memory is configured to store computer instructions, and when the processor executes the computer instructions, the apparatus is enabled to perform the method according to any one of claims 1 to 24.

29. A computer-readable storage medium, wherein the computer-readable storage medium comprises a computer program or instructions, and when the computer program or the instructions are run on a computer, the computer is enabled to perform the method according to any one of claims 1 to 24.

30. A computer program product, wherein the computer program product comprises a computer program or instructions, and when the computer program or the instructions are run on a computer, the computer is enabled to perform the method according to any one of claims 1 to 24.
